# EUROPÄISCHE PATENTSCHRIFT

(11) **EP 1 663 870 B1**
(45) Veröffentlichungstag und Bekanntmachung des Hinweises auf die Patenterteilung: **08.04.2009**
(21) Anmeldenummer: 04764640.1
(22) Anmeldetag: 31.08.2004
(51) Int. Cl.: C01G 1/02, C01G 33/00, C01G 35/00

(54) **VENTILMETALLOXID-PULVER UND VERFAHREN ZU DEREN HERSTELLUNG**
VALVE METAL-OXIDE POWDER AND METHOD FOR PRODUCING SAID POWDER
DE POUDRE D'OXYDE METALLIQUE A EFFET DE SOUPAPE ET SON PROCEDE DE PRODUCTION

(30) Priorität: 12.09.2003 DE 10342600
(43) Veröffentlichungstag der Anmeldung: 07.06.2006
(73) Patentinhaber: H.C. Starck GmbH, 38642 Goslar (DE)
(72) Erfinder: BECK, Karsten, 38640 Goslar (DE); SEYEDA, Hady, 38642 Goslar (DE); LERCH, Klaus, 41564 Kaarst (DE); BALAN, Bianca, Agnes, 38667 Bad Harzburg (DE)
(74) Vertreter: Clauswitz, Kai-Uwe Wolfram
(86) Internationale Anmeldenummer: PCT/EP2004/009674
(87) Internationale Veröffentlichungsnummer: WO 2005/028367

(56) Entgegenhaltungen:
- DE-C- 4 422 761
- US-A- 3 112 991
- US-A- 6 136 062
- US-B1- 6 338 832

## Beschreibung

Die Erfindung betrifft ein Verfahren zur Herstellung eines Ventilmetalloxidpulvers, insbesondere eines Nb₂O₅- oder Ta₂O₅-Pulvers, und so erhältliche Ventilmetalloxidpulver, die eine sphärische Morphologie, eine mittleren Partikelgröße von 10 bis 80 µm und eine hohe BET-Oberfläche aufweisen.

Ventilmetalle besonders die der 4.-6. Nebengruppe des Periodensystems und dort insbesondere Tantal und Niob, sowie deren Legierungen, haben vielfältige Anwendungen. Die Ventilmetalle werden in der Regel durch Reduktion geeigneter Ventilmetallverbindungen, insbesondere durch Reduktion von Ventilmetalloxiden hergestellt.

Ventilmetalloxidpulver sind jedoch nicht nur als Ausgangsstoff zur Herstellung der entsprechenden Metallpulver, sondern auch für zahlreich weitere Anwendungen von Interesse. Beispielsweise werden Niob- und Tantaloxide mit hohen spezifischen Oberflächen in der Herstellung von gemischten Metall-Oxid-Materialien eingesetzt, welche z.B. als Katalysatoren und/oder Funktionskeramiken Anwendung finden.

Um bei der Herstellung solcher Metall-Oxid-Materialien sowohl eine gute Durchmischung von Tantaloxid und/oder Nioboxid mit den weiteren Reaktanden, wie zum Beispiel Kaliumcarbonat oder Molybdäntrioxid, als auch eine Reaktionsführung bei möglichst niedriger Temperatur zu erreichen, ist eine sphärische Morphologie der Ventilmetalloxide in Verbindung mit einer hohen spezifischen Oberfläche von Vorteil. M. Ziolek gibt in "Catalysis Today 78 (2003) 47-64" eine Übersicht über Niob-haltige Katalysatoren. Als wichtigste Verbindungsklasse werden die Nioboxide genannt, die nach Möglichkeit eine hohe spezifische Oberfläche aufweisen sollten.

In der Literatur sind bereits Verfahren zur Herstellung von Niob- und Tantaloxiden mit hohen spezifischen Oberflächen beschrieben. Die nach diesen Verfahren hergestellten Oxide weisen aber in der Regel keine sphärische Morphologie auf, bzw. es handelt sich um nanoskalige Ventilmetalloxidpulver.

So beschreibt DE 4 214 724 C2 die Herstellung feiner Karamikpulver enger Korngrößenverteilung in einer Gasphasenreaktion. Durch Umsetzung von Niob- oder Tantalpentachlorid mit Sauerstoff können so Niob- und Tantalpentoxide hergestellt werden, die gemäß Beispiel eine spezifische Oberfläche von 42 m²/g aufweisen. Bedingt durch die Reaktionsführung in der Gasphase und die Freisetzung von Chlorgas ist dieses Verfahren allerdings sehr aufwändig. Das gemäß Beispiel hergestellte Nb₂O₅ enthält zudem insgesamt 700 ppm an metallischen Verunreinigungen.

T. Tsuzuki und P.G. McCormick beschreiben in "Materials Transactions, Vol. 42, No. 8 (2001), 1623-1628" eine mechanochemische Synthese von Niobpentoxid-Nanopartikeln. Dabei wird festes Niobpentachlorid mit festem Magnesiumoxid bzw. Natriumcarbonat zu Nb₂O₅ mit einer hohen spezifischen Oberfläche von 43,3 bis 196 m²/g hergestellt. Festphasenreaktioneri laufen jedoch nur sehr langsam ab. Es werden Umsetzungszeiten von mehreren Stunden beschrieben. Ein weiterer Nachteil dieses Verfahrens ist, dass die erhaltenen Produkte verfahrensbedingt stark mit Natrium verunreinigt sind. So verunreinigte Niobpentoxide neigen bei einer Temperaturbehandlung (T > 550°C) zur Ausbildung von Na₂Nb₄O₁₁ Phasen.

In "Topics in Catalysis Vol. 19, No. 2, 2002, 171-177" beschreiben J.N. Kondo, Y. Takahara, B. Lee, D. Lu und K. Domen Verfahren zur Herstellung von mesoporösen Tantaloxiden. Nach der sogenannten NST-Methode (neutral surfactant template) wird Tantal(V)chlorid durch Zugabe des chelatisierenden Liganden Poly(alkylenoxid)block-Copolymer Pluronic P-123 (BASF) mittels in der Umgebungsluft vorhandener Feuchtigkeit hydrolisiert. Das so erhaltene Ta₂O₅ weist eine sehr hohe spezifische Oberfläche auf. Nachteilig bei diesem Verfahren ist einerseits die lange Reaktionsdauer von mindestens 6 Tagen, als auch die Entwicklung von HCl-Gas. Auch nach der sogenannten LAT (ligand-assisted templating) Methode wird Ta₂O₅ mit einer hohen spezifischen Oberfläche von 330 bis 410 m²/g erhalten. Nach dieser Methode wird Tantal(V)ethoxid unter Zugabe von Octadecylamin hydrolysiert. Das so erhaltene Produkt ist aber weder thermisch noch mechanisch stabil und damit für eine großtechnische Anwendung oder Weiterverarbeitung nicht einsetzbar. Zudem ist das eingesetzte Tantal(V)ethoxid sehr teuer.

Nanoskalige Nb₂O₅-Pulver mit hohen spezifischen Oberflächen können gemäß C. Feldmann und H.-O. Jungk (Angew. Chem. 2001, 113, Nr. 2, 372-374) auch durch Hydrolyse von Niobethoxid in Diethylenglykol dargestellt werden. So dargestellte Niobpentoxide weisen eine spezifische Brunauer-Emmett-Teller(BET)-Oberfläche von ungefähr 100 m²/g auf. Nachteilig an diesem Verfahren ist wiederum, dass das eingesetzte Tantal(V)ethoxid sehr teuer ist und sich nur nanoskalige Oxidpartikel erhalten lassen.

Niobpentoxid mit einer hohen spezifischen Oberfläche von 232 m²/g kann gemäß H. Kominami, K. Oki, M. Kohno, S. Onoue, Y. Kera und B. Ohtani (Journal of Materials Chemistry 2002, 11(2), 604-609) auch durch Hydrolyse von Niobbutoxid in Toluol dargestellt werden. Nachteilig an diesem Verfahren sind sowohl die mögliche Umweltbelastung durch den Einsatz von Toluol als Lösungsmittel als auch der hohe Materialpreis des eingesetzten Niobbutoxids.

Aus DE 103 07 716 A1 ist bekannt, dass man sphärische Niob- und Tantaloxide durch Fällung von Heptafluorotantalsäure (H₂TaF₇) bzw. Heptafluoroniobsäure (H₂NbF₇) oder deren Mischungen aus flusssaurer Lösung mittels Basen, insbesondere Ammoniak (NH₃), herstellen kann. Dabei fällt Tantalsäure Ta(OH)₅ oder Niobsäure Nb(OH)₅ oder deren Mischung an, die anschließend durch Temperaturbehandlung, die sogenannte Kalzination, in das entsprechende Oxid überführt wird. Diese Oxide weisen allerdings niedrige spezifische Oberflächen von 0,41 bis 0,58 cm²/g auf.

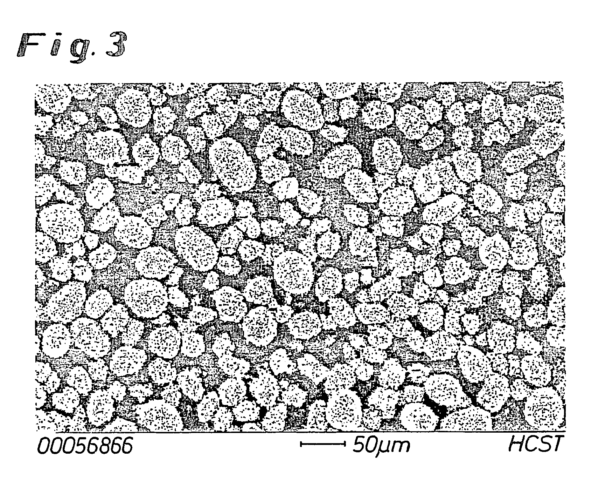

Auch WO 97/13724 A1 offenbart ein Verfahren zur Herstellung von Ventilmetalloxiden durch Fällung von H₂TaF₇ bzw. H₂NbOF₅ mittels Ammoniak. Die Fällung wird in mindestens zwei in Kaskade geschalteten Reaktionsgefäßen durchgeführt, wobei in jedem Reaktionsgefäß Temperatur, pH und Verweilzeit separat eingestellt werden. Dadurch lassen sich die spezifischen Oberflächen und die Dichten der erzeugten Ventilmetalloxide gezielt einstellen. Es werden Ventilmetalloxide mit hoher Oberfläche und geringer Dichte, sowie Ventilmetalloxide mit niedriger Oberfläche und hoher Dichte beschrieben. Unter Ventilmetalloxiden hoher Oberfläche werden gemäß WO 97/13724 A1 jedoch bereits solche Ventilmetalloxide verstanden, die eine BET-Oberfläche von größer als 2 m²/g (Nb₂O₅) bzw. von größer als 3 m²/g (Ta₂O₅) aufweisen. Als Maximalwert wird für Tantalpentoxid-Partikel eine BFT-Oberfläche von 11 m²/g genannt. In den Beispielen wird eine maximale BET-Oberfläche von 6,7 m²/g erreicht (Beispiel 6). Rasterelektronenmikroskopische Aufnahmen von Ventilmetalloxiden mit hoher Oberfläche zeigen, dass diese Produkte unregelmäßige Morphologien aufweisen (Fig. 3A bis 3D und Fig. 5A bis 5D), Sphärische Ventilmetalloxidpulver mit hoher BET-Oberfläche lassen sich also gemäß WO 97/13724 A1 nicht erhalten. Nachteilig an dem Vorgehen gemäß WO 97/13724 A1 ist weiterhin, dass mit der Reaktionsführung in mindestens zwei Reaktionsgefäßen, in denen die wesentlichen Verfahrensparmeter jeweils separat eingestellt werden müssen, ein erhöhter Regelungsaufwand verbunden ist.

Aufgabe der Erfindung ist es, Ventilmetalloxidpulver, insbesondere Nb₂O₅- und Ta₂O₅-Pulver zur Verfugung zu stellen, die sich insbesondere für Festkörperreaktionen eignen, beispielsweise zur Anwendung als Katalysator oder zu dessen Herstellung und als Blektrokeramiken oder zu deren Herstellung, und ein einfaches Verfahren zur Herstellung solcher Ventilmetalloxidpulver anzugeben.

Die Aufgabe wird durch Ventilmetalloxidpulver, die eine sphärische Morphologic, einen D₅₀-Wert von 10 bis 80 µm und eine hohe BET-Oberfläche aufweisen, und ein Verfahren zu deren Herstellung durch Fällung fluoridhaltiger Ventilmetallverbindungen mit einer Base bei erhöhter Temperatur gelöst.

Gegenstand der Erfindung ist daher ein Verfahren zur Herstellung eines Ventilmetalloxidpulvers durch Umsetzung einer fluoridhaltigen Ventilmetallverbindung mit einer Base in Gegenwart von Wasser bei einer Temperatur von mindestens 45°C und Kalzination des dabei entstehenden Produkts, **dadurch gekennzeichnet, dass** die fluorhaltige Ventilmetallverbindung als wässrige Lösung mit einer Konzentration von 0,3 mol/l bis 1,2 mol/l, bezogen auf das Ventilmetall, eingesetzt wird, als Base eine Ammoniaklösung mit einer Ammoniakkunzentration von 3 Gew.-% bis 15 Gew.-% eingesetzt wird und die Reaktion kontinuierlich durchgeführt wird, wobei das Verhältnis von Volumenstrom an wässriger Lösung der fluoridhaltigen Ventilmetallverbindung zum Volumenstrom an wässriger Lösung der Base von 1 : 0,9 bis 1 : 2 beträgt, wobei das molare Konzentrationsverhältnis von fluoridhaltiger Ventilmetallverbindung, berechnet als Ventilmetall, zu Base auf einen Wert von 1 : 5,6 bis 1 : 8,5 eingestellt wird und die Umsetzung in nur einem Reaktionsgefäß durchgeführt wird.

Bei der Umsetzung einer fluoridhaltigen Ventilmetallverbindung mit einer Base in Gegenwart von Wasser kommt es in der Riegel zur Bildung von Ventilmetallhydroxiden, beispielsweise von Niobsäure (Nb(OH)₅) oder Tantalsäure (Ta(OH₅). Solche Ventilmetallhydroxide sind in wässrigen Systemen unlöslich und fallen daher aus der Reaktionsmischung aus. Diese Umsetzung wird daher oft als Fällung oder Fällungsreaktion bezeichnet

Erfindungsgemäß erfolgt die Fällungsreaktion bei erhöhter Temperatur, vorzugsweise beträgt die Temperatur 50 bis 75°C, insbesondere bevorzugt 55 bis 70°C.

Obwohl die Umsetzung der fluoridhaltigen Ventilmetailverbindung mit der Base prinzipiell auch batchweise oder semi-kontinuierlich erfolgen kann, wird die Fällungsreaktion erfindungsgemäß kontinuierlich durchgeführt. Dabei wird erfindungsgemäß so vorgegangen, dass sowohl fluoridhaltige Ventumetallverboidung, als auch Base kontinuierlich einem Reaktionsraum zugeführt werden und das bei der Umsetzung entstehende Produkt kontinuierlich abgezogen wird.

Die Umsetzung erfolgt in nur einem einzigen Reaktionsgefäß. Dies hat den Vorteil, dass der apparative und der regeltechnische Aufwand auf einem Minimum gehalten werden können. Bei dem Reaktionsgefäß kann es sich beispielsweise um einen Rühr-, einen Roher- oder einen Schlaufenreaktor handeln. Vorzugsweise wird ein Rührreaktor eingesetzt.

Das für die Umsetzung benötigte Wasser kann im Reaktionsraum vorgelegt und bei Bedarf nachdosiert werden. Am vorteilhaftesten ist es jedoch, die fluoridhaltigen Ventilmetallverbindung und die eingesetzte Base jeweils in Form einer wässrigen Lösung oder Suspension einzusetzen. Somit wird das Wasser zusammen mit den Reaktanden zugegeben, was eine kontinuierlich Reaktionsführung unter Gewährleistung einer gleichbleibenden Konzentration der Reaktionspartner erlaubt.

Bei dem Ventilmetall handelt es sich vorzugsweise um Niob und/oder Tantal. Entsprechend werden als fluoridhaltige Ventilmetallverbindung vorzugsweise Heptafluoroniobsäure (H₂NbF₇) oder Heptafluorotantalsäure (H₂TaF₇) eingesetzt.

Je nach gewünschter Reinheit des Ventilmetalloxidpulvers kann es nötig sein, die fluoridhaltige Ventilmetallverbindung bzw. die Base vor der Umsetzung, gegebenenfalls mehrfach, aufzureinigen. Verunreinigungen können so bei Bedarf bis in den Parts-per-billion(ppb)-Bereich reduziert werden.

Die fluoridhaltige Ventilmetallverbindung wird als wässrige Lösung eingesetzt, wobei die Konzentration an fluoridhaltiger Ventilmetallverbindung, bezogen auf das Ventilmetall, 0,3 bis 1,2 mol/l, insbesondere bevorzugt 0,6 bis 0,9 mol/l beträgt.

Als Base wird wässrige Ammoniak-Lösung mit einer Ammoniakkonzentration von 3 bis 15 Gew.-%, vorzugsweise von 5 bis 10 Gew.-%, insbesondere bevorzugt von 6 bis 10 Gew.-% eingesetzt.

Die Umsetzung der fluoridhaltigen Ventilmetallverbindung mit der Base wird vorzugsweise bei einem pH-Wert, gemessen bei Reaktionstemperatur, von 7 bis 14 durchgeführt, insbesondere bevorzugt bei einem pH-Wert, gemessen bei Reaktionstemperatur, von 7,0 bis 8,0.

Bei der erfindungsgemäßen Reaktionsführung werden die Volumenströme so eingestellt, dass das Verhältnis von Volumenstrom an wässriger Lösung einer fluoridhaltigen Ventilmetallverbindung zum Volumenstrom an wässriger Lösung der Base von 1 : 0,9 bis 1 : 2, vorzugsweise von 1 : 1,0 bis 1 : 1,5 beträgt. Durch geeignete Wahl der Volumenströme und der Konzentrationen der eingesetzten Lösungen wird das molare Konzentrationsverhältnis von fluoridhaltige Ventilmetallverbinding, berechnet als Ventilmetall, zu Base auf einen Wert von 1 : 5,6 bis 1 : 8,5 eingestellt.

Der absolute Volumenstrom an wässriger Lösung einer fluoridhaltigen Ventilmetallverbindung beträgt vorzugsweise 1 bis 1000 l/h, besonders bevorzugt 200 bis 600 l/h.

Die Verweilzeit des Fällungsprodukts im Reaktionsraum beträgt beispielsweise zwischen 0,25 und 24 h, bevorzugt aber zwischen 30 min und 3 h.

Das so erhaltene sphärische Fällungsprodukt, ein Ventilmetallhydroxid, wird in der Regel durch Filtration abgetrennt, gewaschen und getrocknet und anschließend zum Ventilmetalloxid kalziniert. Falls nötig kann sich eine mechanische Bearbeitung wie Sieben, Brechen, Mahlen oder Agglomerieren anschließen. Falls bei einer solchen mechanische Behandlung mit einem entsprechend hohen Energieeintrag gearbeitet wird, kann die sphärische Morphologie zerstört und das Ventilmetalloxid in eine andere Morphologie überführt werden.

Das Waschen des Fällungsprodukts erfolgt vorzugsweise mit deionisiertem Wasser. Besonders bevorzugt wird der Waschvorgang mehrstufig durchgeführt, wobei zunächst ein- oder mehrfach mit der wässrigen Lösung einer Base, vorzugsweise der Base, die auch zur Fällung eingesetzt wird, und anschließend ein- oder mehrfach mit deionisiertem Wasser gewaschen wird.

Der Waschung schließt sich in der Regel ein Trocknungsschritt an. Vorzugsweise wird bei einer Temperatur von 50-150°C, besonders bevorzugt von 70-110°C getrocknet. Die trocknungszeit beträgt vorzugsweise 1 bis 100 h, besonders bevorzugt 10 bis 30 h.

Um das Fällungsprodukt in das gewünschte Ventilmetalloxid zu überführen, ist eine Temperaturbehandlung bei hoher Temperatur, die sogenannte Kalzination notwendig. Vorzugsweise wird bei einer Temperatur von 250-1400°C, besonders bevorzugt von 300-600°C kalziniert. Die Kalzinationszeit beträgt vorzugsweise 0,1 bis 100 h, besonders bevorzugt 1 bis 50 h, insbesondere bevorzugt 1 bis 5 h. Die Kalzination wird vorzugsweise unter nicht reduzierenden Bedingungen, beispielsweise in Gegenwart von Edelgas oder Raumluft, vorzugsweise in Gegenwart von Luftsauerstoff durchgeführt.

Die Struktur der Ventilmetalloxid-Partikel kann durch eine Hochtemperaturbehandlung, bevorzugt im Temperaturbereich >1000°C, insbesondere bevorzugt nahe dem Schmelzpunkt der Oxide stabilisiert werden. Dadurch können Sinterbrücken zwischen den Primärkörnern verstärkt und die Porenstruktur gezielt variiert werden.

Nach der gegebenenfalls erfolgten Hochtemperaturbehandlung kann sich wiederum eine mechanische Bearbeitung wie Sieben, Brechen oder Mahlen anschließen. Eventuell eingetragene Verunreinigungen wie Kohlenstoff können über eine Nachglühung an Luft, bevorzugt bei Temperaturen zwischen 800-1200°C entfernt werden.

Das erfindungsgernäße Verfahren erlaubt die Herstellung sphärischer Ventilmetalloxidpulver mit einem mittleren Partikel durchmesser D₅₀, bestimmt mittels MasterSizer nach ASTM B 822 von 10 bis 80 µm, bevorzugt zwischen 15 und 40 µm, und einer hohen BET-Oberfläche, bestimmt mittels der N₂-3-Punkt-Methode gemäß ASTM D 3663 von mindestens 10 m²/g und wobei es sich bei dem Ventilmetalloxid um Nb₂O₅ oder Ta₂O₅ handelt.

Die erhaltenen Ventilmetalloxidpulver zeichnen sich weiterhin durch eine sehr enge Korngrößenverteilung der sphärischen Agglomerate aus. Erfindungsgemäß hergestellte Ventilmetalloxide lassen sich durch Reduktion zu Ventilmetallpulvern oder Ventilmetallsuboxiden umsetzen, die vergleichbare Oberflächen und Kapazitäten zu den bislang bekannten, hochkapazitiven Pulvern aufweisen. Im Gegensatz zu diesen bleibt die Fließfähigkeit erhalten. Solche Pulver sind daher hervorragend zur Herstellung von Kondensatoranoden und Kondensatoren geeignet. Durch die homogene Korngrößenverteilung und vergleichsweise geringe Agglomeratgröße wird eine gleichmäßige Packungsdichte in der Anode und somit eine Verbesserung der Qualität und der Ausbeute beim Verwender erzielt. Darüber hinaus kann auch die Sekundarstruktur so eingestellt werden, dass eine gute Imprägnierbarkeit des Agglomerats auch bei sehr feiner Primärstruktur erhalten bleibt.

Gegenstand der Erfindung sind daher auch sphärische Ventilmetalloxidpulver mit einem mittleren Partikeldurchmesser D₅₀, bestimmt mittels MasterSizer nach ASTM B 822 von 10 bis 80 µm, und einer BET-Oberfläche, bestimmt mittels der N₂-3-Punkt-Methode gemäß ASTM D 3663 von mindestens 10 m²/g und wobei es sich bei dem Ventilmetalloxid um Nb₂O₅ oder Ta₂O₅ handelt.

Solche Ventilmetalloxidpulver sind nach dem erfindungsgemäßen Verfahren erhältlich.

Zur Bestimmung der Morphologie der Ventilmetalloxidpulver werden bildgebende Verfahren eingesetzt. Unter Verwendung eines Rasterelektronenmikroskops bei 200-facher Vergrößerung wird eine zweidimensionale Abbildung einer Pulverprobe gewonnen. Dazu wird das Pulver auf einen quadratischen Träger mit haftender Oberfläche aufgebracht. Es wird ein Sichtbereich untersucht, in dem mindestens 200 Partikel sichtbar sind. Die in dieser Abbildung sichtbaren Pulverpartikel werden ausgewertet. Dazu wird um ein abgebildetes Pulverpartikel ein Kreis gelegt, der die beiden Punkte des Partikelumfangs beführt, die maximalen Abstand voneinander aufweisen. Es wird ein weiterer Kreis mit identischem Mittelpunkt gezogen, der nummehr die beiden Punkte des Partikelumfangs berührt, die minimalen Abstand voneinander aufweisen. Das Verhältnis des Durchmessers dieser beiden Kreise dient als Beschreibungskriterium für die Morphologie des Ventumetalloxidpulvers. Ein ideal kugelförmiges Pulverpartikel weist ein Verhältnis von 1 auf, da alle Punkte auf der Oberfläche des Pulverpartikels gleich weit vom Mittelpunkt des Partikels entfernt sind.

Unter sphärischen Ventilmetalloxidpulvern, d.h. Ventilmetalloxidpulvern deren Pulverpartikel annäherend Kugelgestalt aufweisen, werden solche Pulver verstanden, bei denen mindestens 95 % der pulverpartikel ein Verhältnis von Durchmesser des größeren Kreises zu Durchmesser des kleineren Kreises von 1,0 bis 1,4 aufweisen.

Vorzugsweise beträgt der mittleren Parakeldurchmesser D₅₀, bestimmt mittels MasterSizer nach ASTM B 822 15 bis 40 µm.

Die BET-oberfläche bestimmt mittels N₂-3-Punkt-Methode gemäß ASTM D 3663 beträgt vorzugsweise mindestens 15 m²/g, insbesondere bevorzugt mindestens 20 m²/g, besonders bevorzugt mindestens 40 m²/g und ganz besonders bevorzugt mindestens 60 m²/g. Die maximale BET-Oberfläche beträgt vorzugsweise 225 m²/g.

Es handelt es sich bei den erfindungsgemäßen Ventilmetalloxidpulvem um ein Niob- oder Tantaloxidpulver, nämlich um Nb₂O₅- oder Ta₂O₅-Pulver.

Die Erfindung wird nachfolgend anhand von Beispielen näher erläutert, wobei die Beispiele das Verständnis des erfindungsgemäßen Prinzips erleichtern sollen, und nicht als Einschränkung desselben zu verstehen sind.

### Beispiele

Die in den folgenden Beispielen hergestellten Metalloxidpulver bzw. Metallpulver wurden wie in den Beispielen angegeben hinsichtlich verschiedener chemischer und physikalischer Eigenschaften untersucht. Soweit nicht anders vermerkt, wurde dabei wie folgt vorgegangen:

Die Korngrößenverteilung (D₁₀-, D₅₀- und D₉₀-Werte) wurde mittels Laserbeugung unter Verwendung eines MasterSizer Sµ der Firma MALVERN (ASTM B 822) und die spezifische Oberfläche nach dem bekannten Verfahren von Brunauer, Emmett und Teller (BET-Verfahren) mittels der N₂-3-Punkt-Methode gemäß ASTM D 3663 bestimmt. Bei den Prozentangaben handelt es sich, sofern nicht anders angegeben um Gewichtsprozent.

### Vergleichsbeispiel 1

### Nb₂O₅ mit hoher spezifischer Oberfläche

Zu 200 ml Niob(V)ethoxid wurden 80 ml deionisiertes Wasser unter Rühren zugegeben. Das so erhaltene Niob(V)hydroxid (Niobsäure) wurde über eine Nutsche abfiltriert und mit deionisiertem Wasser gewaschen. Anschließend wurde das Niob(V)hydroxid 17 Stunden bei 100°C getrocknet und anschließend 4 Stunden bei 500°C an Luft kalziniert. Es wurden 280 g Nb₂O₅ mit einer spezifischen Oberfläche von 80 m²/g erhalten.

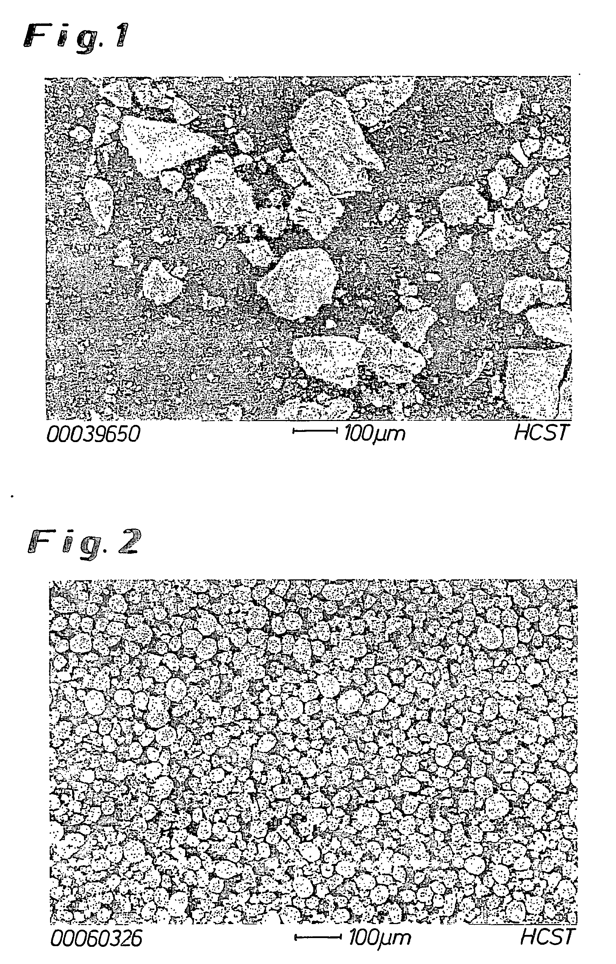

Fig. 1 gibt eine rasterelektronenmikroskopische Abbildung des so hergestellten Nb₂O₅ bei 100-facher Vergrößerung wieder. Es ist deutlich zu erkennen, dass die einzelnen Pulverpartikel unregelmäßig geformt sind und teilweise Plättchenform aufweisen.

### Vergleichsbeispiel 2

### Sphärisches Nb₂O₅ niedriger spezifischer Oberfläche

Unter Vorlage von 200 1 deionisiertem Wasser wurden 7490 1 wässrige H₂NbF₇ Lösung (Konzentration Nb : 80 g/l) kontinuierlich mit 7500 19 %iger wässriger NH₃-Lösung gefällt: Die Temperatur der Lösung betrug ca. 32°C, wobei der pH-Wert auf 7,6 ± 0,4 eingestellt wurde. Die so erhaltene Suspension wurde über eine Druckfilternutsche abgepresst, dann mit 3 %iger wässriger NH₃-Lösung und anschließend mit deionisiertem Wasser gewaschen. Das erhaltene feuchte Niob-(V)hydroxid wurde für 24 h bei 100°C im Trockenschrank getrocknet. Durch Kalzination des getrockneten Niob(V)hydroxids an Luft bei einer Temperatur von 400°C für 2 h wurde ein Nb₂O₅-Pulver mit einer spezifischen Oberfläche von 1,6 m²/g erhalten.

### Vergleichsbeispiel 3

### Ta₂O₅ mit hoher spezifischer Oberfläche

Zu 1000 ml Tantal(V)ethoxid wurde ein Überschuss an deionisiertem Wasser unter Rühren zugegeben. Das so erhaltene Tantal(V)hydroxid wurde über eine Nutsche abfiltriert und mit deionisiertem Wasser gewaschen. Anschließend wurde das Tantal(V)hydroxid 17 h bei 75°C getrocknet. Es wurden 872,1 g Tantal(V)hydroxid mit einem Restwasser-Gehalt von 9,78 % erhalten. 55g dieses Materials wurden 2 Stunden bei 500°C an Luft kalziniert. Das so erhaltene Ta₂O₅ wies eine spezifische Oberfläche von 76 m²/g auf.

### Vergleichsbeispiel 4

### Sphärisches Ta₂O₅ niedriger spezifischer Oberfläche

Unter Vorlage von 300 1 deionisiertem Wasser wurden 6360 1 wässrige H₂TaF₇ Lösung mit einer Konzentration von ca. 82 g/l Ta kontinuierlich mit 5655 1 6 %iger wässriger NH₃-Lösung so gefällt, dass der pH-Wert 7,6 ± 0,4 betrug. Die Temperatur der Lösung betrug ca. 35°C. Die so erhaltene Suspension wurde über eine Druckfliternutsche abgepresst, zuerst mit einer 3 %igen wässrigen NH₃-Lösung und anschließend mit deionisiertem Wasser gewaschen. Das erhaltene feuchte Tantal(V)hydroxid wurde 24 h bei 100°C im Trockenschrank getrocknet und anschließend 2 Stunden bei 400°C an Luft kalziniert. Das in dieser Weise hergestellte Ta₂O₅ wies eine spezifische Oberfläche von 1 m²/g auf.

### Beispiel 1

Unter Vorlage von 300 1 deionisiertem Wasser wurden in einem Rührreaktor 3700 1 wässrige H₂NbF₇ Lösung mit einer Konzentration von 84 g/l Nb kontinuierlich mit 5500 16 %iger wässriger NH₃-Lösung gefällt. Die wässrige-H₂NbF₇ Lösung wurde mit einem Volumenstrom von 300 l/h und die 6 %ige wässriger NH₃-Lösung mit einem Volumenstrom von 450 l/h zugegeben. Der pH-Wert wurde auf 7,6 ± 0,4 eingestellt. Die Temperatur der Lösung betrug 56°C. Die so erhaltene Suspension wurde über eine Druckfilternutsche abfiltriert, mit 3 %iger wässriger NH₃-Lösung und anschließend mit deionisiertem Wasser gewaschen. Das feuchte Niob(V)hydroxid wurde 24h bei 100°C im Trockenschrank getrocknet. Durch Kalzination des getrockneten Niob(V)hydroxides bei einer Temperatur von 500°C für 2h wurde ein Nb₂O₅-Pulver erhalten, welches eine spezifische Oberfläche von 94 m²/g, sowie eine sphärische Morphologie aufwies.

| | | |
|---|---|---|
| MasterSizer -Analysenwerte [µm]: | D10 | 1,77 |
| | D50 | 17,26 |
| | D90 | 33,27 |

### Beispiel 2

Unter Vorlage von 400 1 deionisiertem Wasser wurden 4662 1 wässrige H₂NbF₇ Lösung mit einer Konzentration von 81 g/l Nb kontinuierlich mit 4600 1 9 %iger wässriger NH₃-Lösung gefällt. Die wässrige H₂NbF₇ Lösung wurde mit einem Volumenstrom von 300 l/h und die 9 %ige wässriger NH₃-Lösung mit einem Volumenstrom von 300 l/h zugegeben. Der pH-Wert wurde auf 7,6 ± 0,4 eingestellt. Die Temperatur der Lösung betrug 63°C. Die so erhaltene Suspension wurde über eine Druckfilternutsche abfiltriert, mit 3 %iger wässriger NH₃-Lösung und anschließend mit deionisiertem Wasser gewaschen. Das erhaltene feuchte Niob(V)hydroxid wurde 24 h bei 100°C im Trockenschrank getrocknet. Das Niob(V)hydroxid wies eine spezifische Oberfläche von 201 m²/g auf und zeigte eine größtenteils sphärische Morphologie. Kalzination für 2 h bei einer Temperatur von 500°C ergab ein Nb₂O₅-Pulver mit einer spezifischen Oberfläche von 116 m²/g und einer sphärischen Morphologie.

| | | |
|---|---|---|
| MasterSizer-Analysenwerte [µm]: | D10 | 2,10 |
| | D50 | 20,21 |
| | D90 | 37,28 |

Fig. 2 zeigt eine Rasterelektronenmikroskopische(REM) Abbildung des erhaltenen Nb₂O₅-Pulvers (100-fache Vergrößerung). Die sphärische Morphologie ist deutlich zu erkennen.

### Beispiel 3

Unter Vorlage von 400 1 deionisiertem Wasser wurden 9020 1 wässrige H₂NbF₇ Lösung mit einer Konzentration von 80 g/l Nb kontinuierlich mit 10000 19 %iger wässriger NH₃-Lösung gefällt. Die wässrige H₂NbF₇ Lösung wurde mit einem Volumenstrom von 300 l/h und die 9 %ige wässriger NH₃-Lösung mit einem Volumenstrom von 300 l/h zugegeben. Der pH-Wert wurde auf 7,6 ± 0,4 eingestellt. Die Temperatur der Lösung betrug 69°C. Die so erhaltene Suspension wurde über eine Druckfilternutsche abfiltriert, mit 3 %iger wässriger NH₃-Lösung und anschließend mit deionisiertem Wasser gewaschen. Das erhaltene feuchte Niob(V)hydroxid wurde 24 h bei 100°C im Trockenschrank getrocknet. Kalzination für 2h bei einer Temperatur von 400°C resultierte in Nb₂O₅-Pulver mit einer spezifischen Oberfläche von 140 m²/g und einer sphärischen Morphologie.

| | | |
|---|---|---|
| MasterSizer-Analysenwerte [µm]: | D10 | 2,60 |
| | D50 | 20,97 |
| | D90 | 38,12 |

Fig. 3 zeigt eine Rasterelektronenmikroskopische(REM) Abbildung des erhaltenen Nb₂O₅-Pulvers (200-fache Vergrößerung). Die sphärische Morphologie ist deutlich zu erkennen.

## Patentansprüche

1. Verfahren zur Herstellung eines Ventilmetalloxidpulvers durch Umsetzung einer fluoridhaltigen Ventilmetallverbindung mit einer Base in Gegenwart von Wasser bei einer Temperatur von mindestens 45°C und Kalzination des dabei entstehenden Produkts, **dadurch gekennzeichnet, dass** die fluorhaltige Ventilmetallverbindung als wässrige Lösung mit einer Konzentration von 0,3 mol/l bis 1,2 mol/l, bezogen auf das Ventilmetall, eingesetzt wird, als Base eine Ammoniaklösung mit einer Ammoniakkonzentration von 3 Gew.-% bis 15 Gew.-% eingesetzt wird und die Reaktion kontinuierlich durchgeführt wird, wobei das Verhältnis von Volumenstrom an wässriger Lösung der fluoridhaltigen Ventilmetallverbindung zum Volumenstrom an wässriger Lösung der Base von 1 : 0,9 bis 1 : 2 beträgt, wobei das molare Konzentrationsverhältnis von fluoridhaltiger Ventilmetallvcrbindung, berechnet als Ventilmetall, zu Base auf einen Wert von 1 : 5,6 bis 1 : 8,5 eingestellt wird und die Umsetzung in nur einem Reaktionsgefäß durchgeführt wird.

2. Verfahren nach Anspruch 1, **dadurch gekennzeichnet, dass** es sich bei der fluoridhaltigen Ventilmetallverbindung um H₂NbF₇ oder H₂TaF₇ handelt.

3. Verfahren gemäß Anspruch 1 oder 2, **dadurch gekennzeichnet, dass** die Umsetzung der fluoridhaltigen Ventilmetallverbindung mit der Base bei einem pH-Wert, gemessen bei Reaktionstemperatur, von 7 bis 14 durchgeführt wird.

4. Sphärisches Ventilmetalloxidpulver mit einem mittleren Partikeldurchmesser D₅₀, bestimmt mittels MasterSizer nach ASTM B 822 von 10 bis 80 µm, **dadurch gekennzeichnet, dass** die BET-Oberfläche bestimmt mittels N₂-3-Punkt-Methode gemäß ASTM D 3663 mindestens 10 m²/g beträgt und wobei es sich bei dem Ventilmetalloxid um Nb₂O₅ oder Ta₂O₅ handelt.

5. Verwendung eines Ventilmetalloxidpulvers nach Anspruch 4 zur Herstellung von Ventilmetallpulvern oder Ventilmetallsuboxiden durch Reduktion.

## Claims

1. Process for producing a valve metal oxide powder by reacting a fluoride-containing valve metal compound with a base in the presence of water at a temperature of at least 45°C and calcining the product which is formed, **characterized in that** the fluorine-containing valve metal compound is used as an aqueous solution with a concentration of 0.3 mol/l to 1.2 mol/l, based on the valve metal, the base used is an ammonia solution with an ammonia concentration of 3% by weight to 15% by weight, and the reaction is carried out continuously, the ratio of the volumetric flow of aqueous solution of the fluorine-containing valve metal compound to the volumetric flow of aqueous solution of the base being from 1 : 0.9 to 1 : 2, the molar concentration ratio of fluorine-containing valve metal compound, calculated as valve metal, to base being set to a value of from 1 : 5.6 to 1 : 8.5, and the reaction being carried out in just one reaction vessel.

2. Process according to Claim 1, **characterized in that** the fluorine-containing valve metal compound is H₂NbF₇ or H₂TaF₇.

3. Process according to Claim 1 or 2, **characterized in that** the reaction of the fluoride-containing valve metal compound with the base is carried out at a pH, measured at reaction temperature, of from 7 to 14.

4. Spherical valve metal oxide powder having a mean particle diameter D₅₀, determined by MasterSizer in accordance with ASTM B 822 of from 10 to 80 µm, **characterized in that** the BET surface area, determined by means of N₂ 3-point method in accordance with ASTM D 3663, is at least 10 m²/g, and wherein the valve metal oxide is Nb₂O₅ or Ta₂O₅.

5. Use of a valve metal oxide powder according to Claim 4 for producing valve metal powders or valve metal sub-oxides by reduction.

## Revendications

1. Procédé de préparation d'une poudre d'oxyde de métal soupape par transformation d'un composé de métal soupape contenant du fluorure avec une base en présence d'eau à une température d'au moins 45°C et par calcination du produit ainsi formé, **caractérisé en ce qu'**on utilise le composé de métal soupape contenant du fluor sous forme d'une solution aqueuse présentant une concentration de 0,3 mole/l à 1,2 moles/l, par rapport au métal soupape, on utilise comme base une solution d'ammoniaque présentant une concentration en ammoniaque de 3% en poids à 15% en poids et la réaction est réalisée en continu, le rapport du flux volumique de solution aqueuse du composé de métal soupape contenant du fluorure au flux volumique de solution aqueuse de la base étant de 1:0,9 à 1:2, le rapport molaire de la concentration en composé de métal soupape contenant du fluorure, calculée en métal soupape, à la base étant réglé à une valeur de 1:5,6 à 1:8,5 et la transformation étant réalisée dans seulement un récipient de réaction.

2. Procédé selon la revendication 1, **caractérisé en ce qu'**il s'agit, pour le composé de métal soupape contenant du fluorure, de H₂NbF₇ ou de H₂TaF₇.

3. Procédé selon la revendication 1 ou 2, **caractérisé en ce que** la transformation du composé de métal soupape contenant du fluorure avec la base est réalisée à un pH mesuré à la température de réaction de 7 à 14.

4. Poudre d'oxyde de métal soupape sphérique présentant un diamètre moyen de particule D₅₀, déterminé au moyen d'un MasterSizer selon la norme ASTM B 822, de 10 à 80 µm, **caractérisée en ce que** la surface BET déterminée selon le procédé à 3 points à N₂ selon la norme ASTM D 3663 est d'au moins 10 m²/g et où il s'agit, pour l'oxyde de métal soupape, de Nb₂O₅ ou de Ta₂O₅.

5. Utilisation d'une poudre d'oxyde de métal soupape selon la revendication 4 pour la préparation de poudres de métal soupape ou de sous-oxydes de métal soupape par réduction.
